# EUROPÄISCHE PATENTSCHRIFT

(11) **EP 2 591 681 B1**
(45) Veröffentlichungstag und Bekanntmachung des Hinweises auf die Patenterteilung: **04.01.2017**
(21) Anmeldenummer: 11189014.1
(22) Anmeldetag: 14.11.2011
(51) Int. Cl.: A22C 25/08, A22C 25/17

(54) **Transportvorrichtung mit einer Förderstrecke, eingerichtet zum Zuführen einer Mehrzahl von Weichteile aufweisenden Verzehrprodukten an eine Bearbeitungseinrichtung sowie Bearbeitungsmaschine mit Transportvorrichtung und Bearbeitungseinrichtung**
Transport device with a conveyor, set up to convey a number of consumables comprising soft parts to a processing device and processing machine with transport device and processing device
Dispositif de transport doté d'une voie de transport agencée de manière à alimenter une multitude de produits de consommation comprenant des parties molles sur un dispositif de traitement et machine de traitement dotée d'un dispositif de transport et dispositif de traitement

(43) Veröffentlichungstag der Anmeldung: 15.05.2013
(73) Patentinhaber: Nordischer Maschinenbau Rud. Baader GmbH + Co. KG, 23560 Lübeck (DE)
(72) Erfinder: Schwarz, Olaf, 23560 Lübeck (DE)
(74) Vertreter: Stork Bamberger

(56) Entgegenhaltungen:
- EP-A1- 0 445 892
- EP-A1- 2 210 495
- EP-A1- 2 260 714
- US-A- 6 129 625
- US-A1- 2003 008 607

## Beschreibung

Die Erfindung betrifft eine Transportvorrichtung mit einer Förderstrecke, eingerichtet zum Zuführen einer Mehrzahl von in Förderrichtung mit Längsausrichtung aufeinanderfolgenden, gleichartigen, Weichteile aufweisenden, zu bearbeitenden Verzehrprodukten, die jeweils quer zur Förderrichtung einen durch Breiten- und Höhendimension bestimmten veränderlichen Profilquerschnitt mit insbesondere abfallenden bzw. ansteigenden Weichteilbereichen aufweisen, an eine Bearbeitungseinrichtung, umfassend wenigstens einen Förderabschnitt mit einander zugewandten Förderflächen, die in der Höhendimension der Verzehrprodukte entsprechender Dimension übereinander angeordnet sind und unter Druckanlage an den Verzehrprodukten diese zwischen sich aufnehmen derart, dass zwischen den Förderflächen ein während der Förderung sich mit veränderlichem Förderquerschnitt in Breiten- und Höhendimension an die Form jedes Profilquerschnitts der geförderten Verzehrprodukte anpassender Förder-Zwischenraum ausgebildet ist, wobei die eine erste Förderfläche eine an die geförderten Verzehrprodukte zur Anlage kommende, flexibel flächenverformbare, mittels Förderantrieb in Förderrichtung bewegbare Förderdecke sowie eine Reihenanordnung von Andrückelementen umfasst, die in zur Förderrichtung quer gerichteter Reihe nebeneinander, jede Breite des Förder-Zwischenraums erfassend, stationär an der Transportvorrichtung angeordnet sind, und jeweils ein quer zur Förderrichtung gerichtetes Andrück-Querprofil aufweisen und in Richtung der Höhendimension des Förder-Zwischenraums gegen Rückstellkraft verdrängbar gehalten sind, derart, dass sie beim Durchgang der Verzehrprodukte durch die Förderstrecke zum Ausbilden des veränderlichen Förderquerschnitts mit der flächenverformbaren Förderdecke zusammenwirken und gegen die Verzehrprodukte arbeiten.

Die Erfindung bezieht sich auch auf eine Bearbeitungsmaschine, umfassend wenigstens eine Bearbeitungseinrichtung mit wenigstens einem Schneidwerkzeug zum Abtrennen wenigstens eines Bestandteils von in Reihe geförderten Verzehrprodukten sowie eine der Bearbeitungseinrichtung vorgeordnete und zugeordnete genannte Transportvorrichtung, wobei die Bearbeitungseinrichtung unmittelbar am Ende eines die Verzehrprodukte in Reihe fördernden Zwischenraum-Förderabschnitts der Transportvorrichtung angeordnet ist.

Aus EP 2 210 495 A1 ist eine Vorrichtung zum Trimmen von Fleischstücken bekannt. Von jedem Fleischstück wird eine Fettschicht getrennt. Das Fleischstück wird mit Förder- und Andrückrollen, die elastisch verformbar sind, gegen eine stationäre Gegenanlage gepresst. Die stationäre Gegenanlage weist eine Reihe von Elementen auf, die in ihren Positionen verstellbar und festsetzbar sind. Die Elemente werden mittels einer Steuerung in Positionen gesetzt, die der Gegenanlage eine feste Form erteilen, die der Form der Fettschicht entspricht. Infolgedessen wird die Fettschicht unter Anpressung zum Abtrennen geebnet. - US 6129625 A offenbart eine weitere Vorrichtung zum Trimmen von Fleischstücken. Die Fleischstücke werden entlang einer Förderstrecke zwischen einander zugewandten Förderflächen transportiert, die einerseits durch Gegenanlageflächen und andererseits durch eine verformbare Anpressfläche eines umlaufenden Förderbandes gebildet sind. Die verformbare Anpressfläche arbeitet gegen federbelastete Andrückrollen, die entlang der Transportstrecke in Reihe angeordnet sind.

Die gattungsgemäße Transportvorrichtung ist als Bestandteil einer Enthäutemaschine für Fischfilets bekannt. Die Transportvorrichtung wird dicht vor der Schneide eines Bandmessers angeordnet. Ein mit Hautseite nach unten, insbesondere mit seinem Schwanzende voraus auf die zweite Förderfläche aufgelegtes Fischfilet wird durch den Förder-Zwischenraum transportiert. Die zweite Förderfläche ist eine flächensteife und unverformbare Gegenanlage. Beim Eindringen in den Förder-Zwischenraum werden die Andrückelemente je nach dem Höhen- bzw. Profilquerschnittsmaß des Fischfilets kontaktiert und individuell angehoben. Auf diese Weise wird das Fischfilet in gestreckter Lage dem Bandmesser zugeführt, das insbesondere eine dünne, den Silberspiegel beseitigende Schicht abtrennt. Das Enthäuten soll ohne Anschnittverlust und ohne Bildung von Hautinseln erfolgen. Zum Andrücken der ersten Förderfläche werden bekannte Andrückelemente in Form von Fingern vorgesehen. Mit dem Ziel, dass die Fischfilets in gestreckter Lage und an jeder Stelle in ihrer Breite gleichmäßig auf die Gegenanlage gedrückt gehalten werden, hat man die bekannten Finger mit einem Flachprofil versehen, das eine plane Andrückfläche mit seitlich gerundeten Kanten aufweist. Man hat angenommen, dass ein solches Flachprofil bei üblichen Fördergeschwindigkeiten (z.B. 80m/min) zum definierten Andrücken von Filets auch mit größeren Maßen und mit insbesondere dünnem Bauchlappenbereich an die zweite Förderfläche geeignet ist. Allerdings hat sich herausgestellt, dass insbesondere im Bereich einer dünnen Bauchhöhle in der Breitendimension äußere Finger nicht mehr oder unzureichend angehoben werden, so dass - das dürfte die Folge sein - das Fleisch, wenn auch nur geringfügig, nach Innen zur Fördermitte zusammengeschoben wird. Generell dürfte von einem nächstäußeren Finger ein wenn auch nur geringfügiges Stauchen zur Mitte der Förderstrecke hin stattfinden. Jedenfalls bleibt das Ergebnis eines Tiefenenthäutens von größer dimensionierten Filets, zum Beispiel von Lachsfilets, die mit bekannten Andrückfingern angedrückt werden, unbefriedigend.

Danach hat es sich die Erfindung zur Aufgabe gemacht, die Anlage der verformbaren Förderfläche mittels der Andrückelemente an die Weichteile aufweisenden, zu bearbeitenden Verzehrprodukte wesentlich zu verbessern, um, auch weitgehend unabhängig von sehr unterschiedlichen Dimensionen der Verzehrprodukte, am Ausgang der Transportvorrichtung Verzehrprodukte in optimal vergleichmäßigter definierter Lage zu erhalten, in der die anschließende Bearbeitung zuverlässig und ohne Störung bzw. Fehlbearbeitung durchführbar ist.

Die Aufgabe bzw. Ziele der Erfindung werden erfindungsgemäß in Verbindung mit den Merkmalen der eingangs genannten Transportvorrichtung dadurch gelöst, dass wenigstens eine Teilreihe bildende Andrückelemente jeweils mit einer das Andrück-Querprofil bestimmenden Andrückfläche ausgebildet sind, die zur Anpressanlage an die Förderdecke und gegen das passierende Verzehrprodukt über das gesamte Andrück-Querprofil im Profilquerschnitt konvex ausgeformt ist. Gleichermaßen werden erfindungsgemäß bei einer eingangs genannten Bearbeitungsmaschine Aufgabe und Ziele dadurch gelöst, dass die der Bearbeitungseinrichtung vorgeordnete Transportvorrichtung erfindungsgemäß gestaltet ist.

Es ist gefunden worden, dass mit den erfindungsgemäßen Maßnahmen eine Reihe von Vorteilen erzielt wird. Man erreicht, dass zwischen benachbarten Andrückstellen der Andrückelemente an die Förderdecke in von dem Verzehrprodukt verdrängten Positionen weitgehend vergleichmäßigte Andrückabstände eingerichtet sind. Die erfindungsgemäßen Andrückelemente weisen über ihren gesamten Profilquerschnitt und mit einer Berührungslänge, in der sie in Abhängigkeit von der Höhe bzw. den Querprofilen der Verzehrprodukte an diesen zur indirekten Anlage kommen, eine ausgeprägte konvexe, nach außen gewölbte Krümmung auf. Dies führt im Zusammenwirken mit der ersten flächenverformbaren Förderfläche bei den üblichen und auch höheren Fördergeschwindigkeiten sowie für zu bearbeitende Verzehrprodukte sehr unterschiedlicher, auch relativ großer Dimensionen zu optimalen Ergebnissen. Die Verzehrprodukte, insbesondere nämlich Lachsfilets, die insbesondere Schwanz voraus gefördert werden, lassen sich in einer herkömmlichen Bandmesser-Station nun fehlerfrei tiefenenthäuten. Die Lage der zu bearbeitenden Verzehrprodukte vor dem Bearbeitungswerkzeug ist in jedem Fall definiert. Es wird eine optimale Anlage der ersten Förderfläche in Verbindung mit den Andrückelementen an der Oberfläche der Verzehrprodukte bzw. der Filets erzielt. Zu Fehlern führende Falten oder Stauchungen im Körper bzw. Fleisch des Verzehrprodukts werden zuverlässig vermieden, und eine sehr feine Bearbeitung, z.B. das Abtrennen besonders dünner Haut, wird möglich.

Der Zwischenraum-Förderabschnitt bzw. die beiden Förderflächen nehmen die Verzehrprodukte zur Förderung in Förderrichtung schlupffrei mit, wobei sie sich grundsätzlich mit gleicher Fördergeschwindigkeit bewegen. Die flächenverformbare Förderdecke ist derart beschaffen und insbesondere steht sie derart unter Vorspannung, dass sie sich im Zusammenwirken mit den Andrückelementen an die Kontur der passierenden Verzehrprodukte anschmiegt. Zweckmäßig ist die Förderdecke durch einen die Verzehrprodukte zur Förderung mitnehmenden Transportsektor eines mittels Förderantriebs bewegbaren, umlaufenden Transportbandes gebildet, das gespannt gehalten wird. Grundsätzlich ist die zweite Förderfläche eine eine plane Gegenanlagefläche bildende formhaltige Transportanlagefläche. Zwischen der Förderdecke bzw. dem Transportband und den Andrückelementen ist eine Gleitanlage ausgebildet.

Obwohl es möglich ist, dass zur besonderen Behandlung oder Anpassung an Bereiche der Verzehrprodukte zugeordnet nur eine Teilreihe von Andrückelementen mit den konvexen Andrückflächen vorgesehen wird, werden bevorzugt sämtliche Andrückelemente jeweils mit der konvexen Andrückfläche ausgebildet. Zwar können die konvexen Andrückflächen in Anpassung an besondere Dimensionen der Verzehrprodukte insbesondere gruppen- oder reihenweise unterschiedlich ausgebildet sein. Vorzugsweise sind aber die konvexen Andrückflächen sämtlich gleich ausgebildet. Zweckmäßig sind sämtliche Andrückelemente mit konvexer Andrückfläche wenigstens einer Teilreihe gleich ausgebildet und in der Breitendimension des Zwischenraum-Förderabschnitts zumindest im Wesentlichen äquidistant angeordnet.

Bevorzugt sind die Andrückelemente in dichter Packung angeordnet derart, dass sie sich nahezu berühren. Entsprechend sind vorteilhaft die Abstände zwischen benachbarten konvexen Andrückflächen klein im Verhältnis zu den konvexen Profil-Querdimensionen benachbarter Andrückflächen.

Wenigstens eine Teilreihe mit den jeweils die konvexe Andrückfläche aufweisenden Andrückelementen kann wenigstens einem ansteigenden bzw. abfallenden Weichteilbereich von zu fördernden Verzehrprodukten zugeordnet werden.

Eine besonders vorteilhafte und bevorzugte Gestaltung besteht darin, dass die Andrückelemente sich über den Förder-Zwischenraum entsprechend der Förderrichtung erstreckende stabförmige Elemente umfassen, die insbesondere um eine zur Förderrichtung quer gerichtete Schwenkachse gegen Rückstellkraft schwenkbewegbar angelenkt sind. Eine grundsätzliche Gestaltung besteht darin, dass die Schwenkachse an einer Einlaufseite des Zwischenraum-Förderabschnitts angeordnet ist und die stabförmigen Elemente jeweils an ihrem einen Ende an die Schwenkachse angelenkt sind. Eine weiterhin bevorzugte und besonders vorteilhafte Gestaltung besteht darin, dass die konvexe Andrückfläche durch die Oberfläche eines Kreisabschnitts des Andrückprofils des Andrückelements gebildet ist. Vorteilhaft wird der Abstand zwischen benachbarten Andrückelementen klein gegenüber dem Radius eines Kreisabschnitts gewählt.

Eine bevorzugte Gestaltung besteht darin, dass die konvexen Andrückelemente wenigstens einer Teilreihe der Andrückelemente durch sich entsprechend der Förderrichtung erstreckende zylinderförmige Elemente mit die konvexe Andrückfläche bildendem Kreisquerschnitt gebildet sind. Eine vorteilhafte Gestaltung besteht darin, dass die kreiszylinderförmigen Elemente sich in Förderrichtung erstreckende Rollen sind, die um ihre Rollenachsen vorzugsweise frei drehbar gelagert sind. Die Stab-Zylinderlänge bzw. die Rollenlänge bildet eine Berührungslänge aus, innerhalb derer die Andrückelemente mit ihren konvexen Andrückflächen indirekt über die verformbare Förderfläche mit den Verzehrprodukten in Kontakt kommen.

Die Bearbeitungseinrichtung einer erfindungsgemäßen Bearbeitungsmaschine kann mit einem quer zur Förderrichtung arbeitenden Schneidwerkzeug ausgebildet sein, das zum Trennen einer insbesondere sehr dünnen Oberflächenschicht von an der zweiten Förderfläche plan anliegender Seite jeweils von angeförderten Verzehrprodukten, insbesondere zum Entfernen einer Oberflächenschicht an der Unterseite von Fischfilets, eingerichtet ist.

Die Bearbeitungsmaschine kann ohne Weiteres als Enthäutemaschine eingerichtet sein. Diese umfasst zum Beispiel zwei Trennstationen zum Entfernen zunächst einer oberen Normalschicht und dann einer Tiefenschicht an der Unterseite von Fischfilets, wobei wenigstens der Trennstation zum Abtrennen der Tiefenschicht eine erfindungsgemäße Transportvorrichtung vorgeordnet ist. Eine Ausgestaltung besteht darin, dass die der zweiten Trennstation vorgeordnete Transportvorrichtung sowie die Transportvorrichtung vor der ersten Trennstation Bestandteile eines gemeinsamen Fördermittels sind, das ein angetriebenes Transportband mit einem Transportsektor umfasst, der sich aus einem Bereich vor der ersten Trennstation bis in den Bereich der zweiten Trennstation erstreckt. Beide Transportvorrichtungen können als erfindungsgemäße Transportvorrichtungen mit die konvexen Andrückflächen aufweisenden Andrückelementen ausgebildet sein.

Auch kann eine Enthäutemaschine nur eine einzige Trennstation mit zugeordneter erfindungsgemäßer Transportvorrichtung umfassen.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als unabhängiges Detailbeispiel für andere nicht oder nicht vollständig beschriebene, unter die Erfindung fallende Ausführungen und Gestaltungen zu verstehen.

Es zeigen
- Fig. 1: in Seitenansicht eine erfindungsgemäße Bearbeitungsmaschine zum Enthäuten von Fischfilets, umfassend eine erfindungsgemäße Transportvorrichtung;
- Fig. 2: in axonometrischer Ansicht eine erfindungsgemäße Transportvorrichtung, wie sie Bestandteil der Bearbeitungsmaschine der Fig. 1 ist;
- Fig. 3: einen Teillängsschnitt der Transportvorrichtung der Fig. 2 im Bereich der erfindungsgemäßen Zwischenraum-Förderung,
- Fig. 4A und 4B: in Draufsicht und geschnittener Seitenansicht ein erfindungsgemäßes Andrückelement und
- Fig. 5A bis 5D: Positionen und Stellungen von Andrückelementen einer erfindungsgemäßen Transportvorrichtung beim Passieren von Fischfilets.

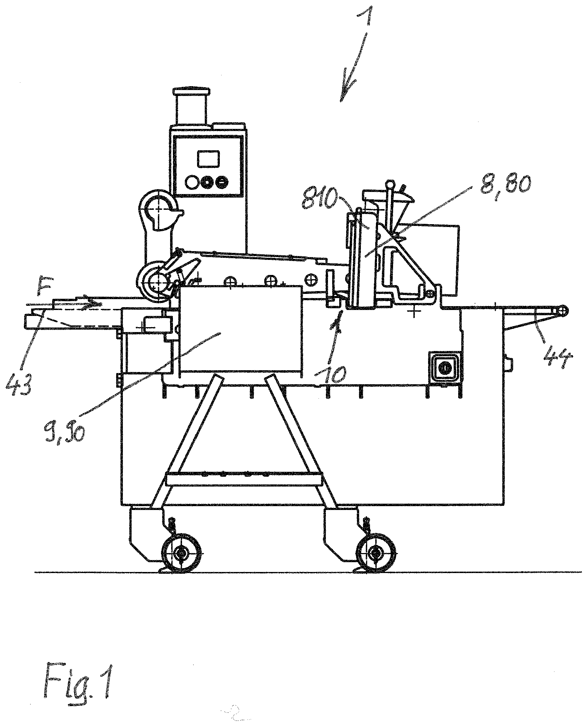

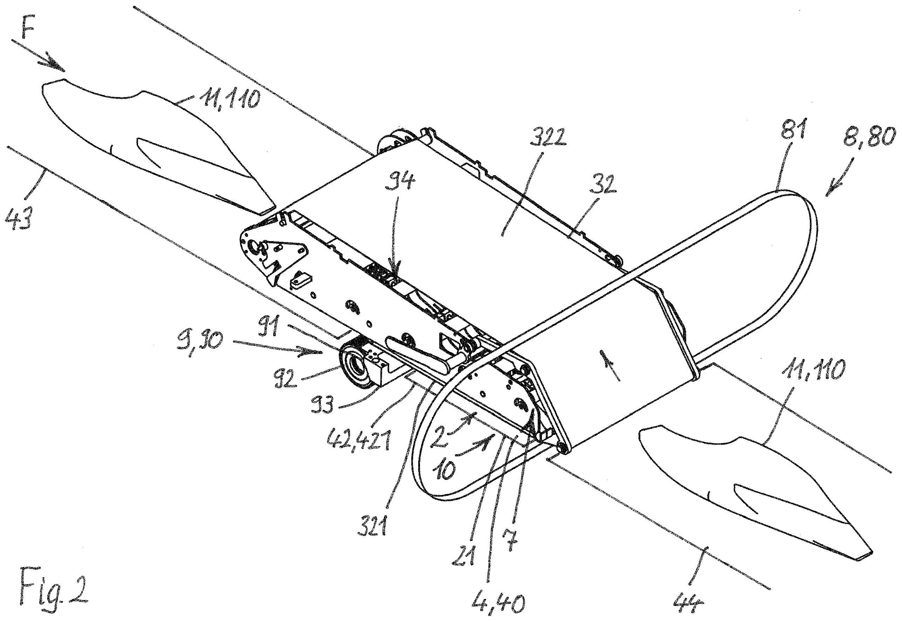

Gemäß Fig. 1 ist eine erfindungsgemäße Bearbeitungsmaschine 1 als Enthäutemaschine zum Enthäuten von Weichteile aufweisenden Verzehrprodukten 11, nämlich von Fischfilets 110, eingerichtet. Längs einer in Förderrichtung F sich erstreckende Bearbeitungslinie ist eine vordere (aufwärts gelegene) Bearbeitungseinrichtung 9, nämlich eine erste Trennstation 90 zum Abtrennen einer Normalschicht vorgesehen, während sich in einem anschließenden (abwärts gelegenen) Bereich eine Bearbeitungseinrichtung 8, nämlich eine Trennstation 80, zum Abtrennen einer Tiefenschicht befindet. Aus Fig. 2 geht hervor, dass die Fischfilets 110, auf ihrer Hautseite liegend, aufeinanderfolgend Schwanz voraus gefördert werden. Sie werden auf einem angetriebenen Transportband 43 eingefördert.

Die Anordnung der beiden Trennstationen 80, 90 ist an sich bekannt. Wie aus Fig. 2 ersichtlich, umfasst die Trennstation 90 in üblicher Kombination eine Mitnehmerwalze 92 und einen Andrückschuh 93, die einen Einzugsspalt 91 zum Abtrennen der Normalschicht bilden. Die Trennstation 80 umfasst ein Messergehäuse 810, in dem ein Schneidwerkzeug 81, das in üblicher Weise durch ein umlaufendes Bandmesser gebildet ist, zwischen einem mittleren Transportband 42 und einem ausgangsseitigen Transportband 44 angeordnet ist. Das Bandmesser, befreit von Antrieb und Lagermittel, ist aus Fig. 2 ersichtlich. Die Antriebe der Förderbänder sind nicht dargestellt.

Im Folgenden wird die Trennstation 80 näher beschrieben. Der Trennstation 80 ist eine erfindungsgemäße Transportvorrichtung 10 vorgeordnet. Diese weist einen Förderabschnitt 21 auf, mit, einander zugewandt, einer ersten, oberen Förderfläche 3 und einer zweiten, unteren Förderfläche 4. Die einander zugewandten Förderflächen 3, 4 sind in der Höhendimension der Fischfilets 110 entsprechender Dimension übereinander angeordnet. Die untere Förderfläche 4 ist durch einen Transportsektor 421 des Transportbandes 42 gebildet. Die obere Förderfläche 3 umfasst Andrückelemente 5 einer Andrückeinrichtung 7 und eine verformbare Förderdecke 31, die durch den Transportsektor 321 eines umlaufend angetriebenen flexibel flächenverformbaren Transportbandes 32 gebildet ist. Im förderfreien Zustand liegen sich die Transportsektoren 321, 421 zum Beispiel plan parallel gegenüber. Sie bilden einen Förder-Zwischenraum 2. Der Transportsektor 421 bildet eine unnachgiebige, tischartig plane Gegenanlagefläche 40 aus.

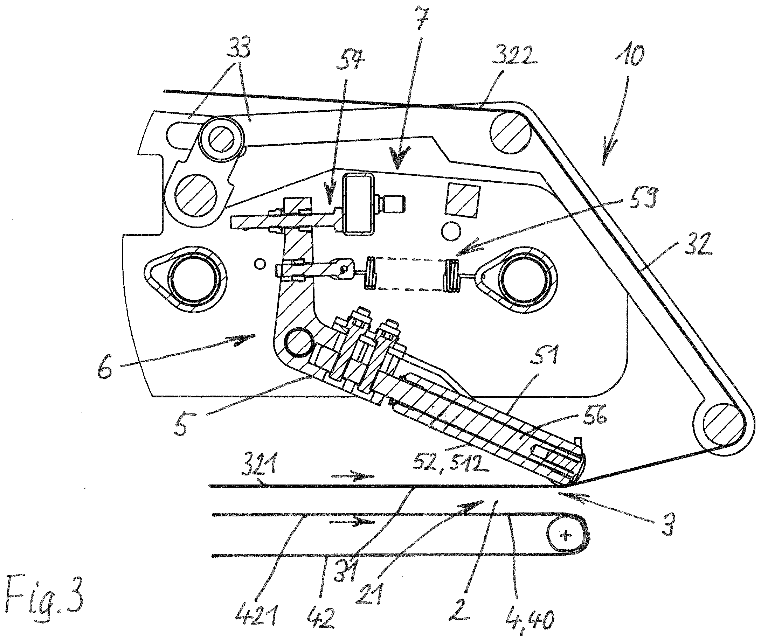

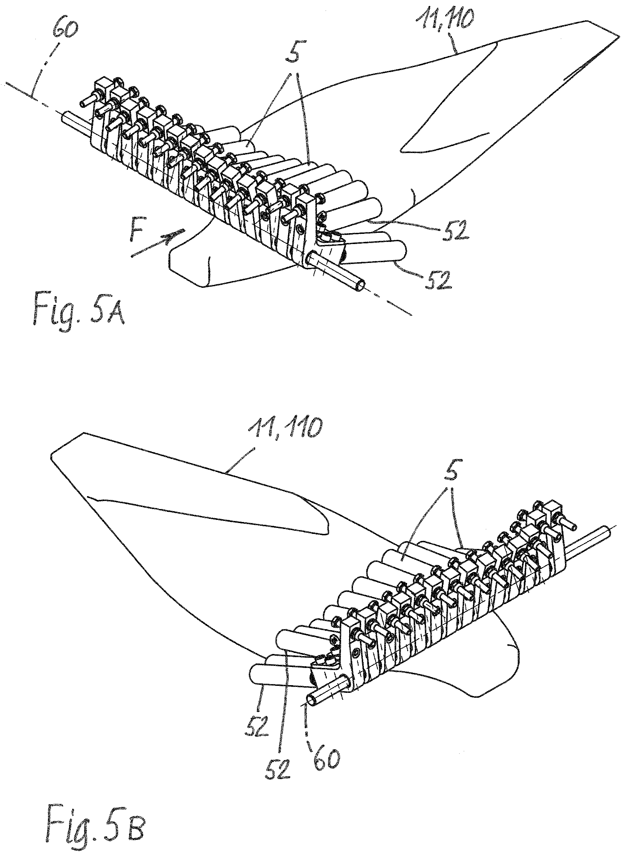

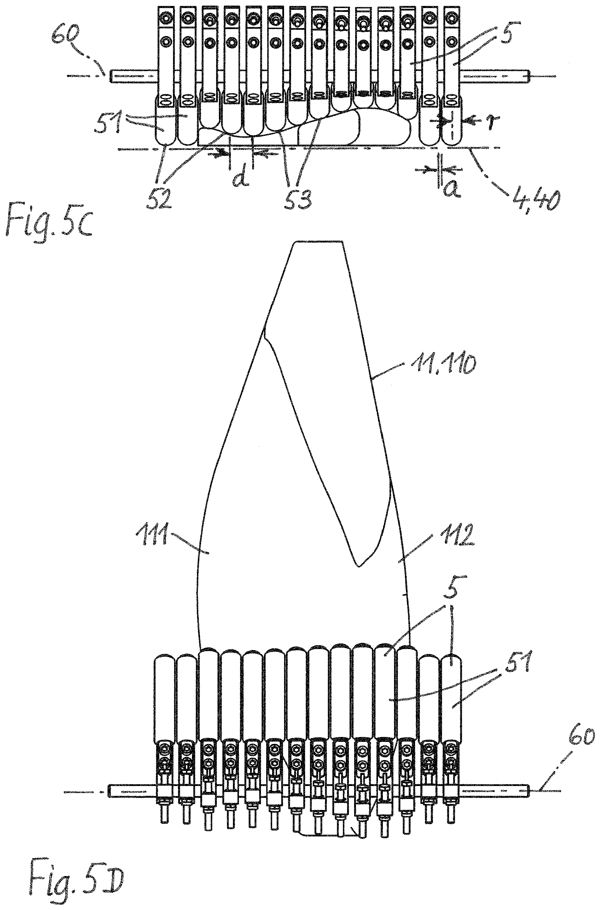

Zwischen dem Transportsektor 321 und einem Rücklaufsektor 322 des umlaufenden Transportbandes 32 ist die Andrückeinrichtung 7 erfindungsgemäß ausgebildet. Diese umfasst, wie aus Fig. 3 und 5A bis 5D ersichtlich, eine Reihenanordnung der Andrückelemente 5, die in zur Förderrichtung F senkrecht gerichteter Reihe nebeneinander, die Breite des Förder-Zwischenraums 2 vollständig erfassend, stationär an einem nicht dargestellten Gestell der Transportvorrichtung 10 angeordnet sind. Im Ausführungsbeispiel umfasst die Andrückreihe vierzehn Andrückelemente 5, die in dichter Packung, nämlich berührungslos dicht beabstandet und äquidistant nebeneinander angeordnet sind. Die Andrückelemente 5 umfassen stabförmige Elemente, jeweils mit einem Andrückkopf oder -endbereich 511, der in Gleitanlage an dem Transportsektor 321 anliegt und sich in Fig. 3B in förderfreier Ausgangsposition befindet. Das Transportband 42 wird durch Spannmittel 33 gespannt gehalten, derart, dass es stets ausreichend straff an dem Andrückkopf 511 anliegt.

Wie insbesondere aus Fig. 3 ersichtlich, ist jedes Andrückelement 5 mittels Schraubverbindung 55 mit dem andrückseitigen Arbeitsarm 541 eines Winkelstücks 54 verbunden. Die Winkelstücke 54 sind individuell mittels einer Schwenkeinrichtung 6 gelagert, und zwar um eine vorrichtungsstationäre Schwenkachse 60, die sich senkrecht zur Förderrichtung F sowie parallel zur Gegenanlagefläche 40 erstreckt. Die Winkelstücke 54 sind jeweils an freiem Winkelarm 542 mit der Zugfeder einer Zugfedereinrichtung 59 verbunden, die Schwenk-Rückstellkraft erzeugt, wenn der Förder-Zwischenraum 2 durch Aufschwenken des zugehörigen Andrückelements 5 geweitet wird. Eine Stoppeinrichtung 57 umfasst einen vorrichtungsstationären Anschlag, gegen den jeder freie Winkelarm 542 mittels eines Stoppstiftes zum Einrichten der Normal-/Ausgangsposition unter Wirkung der Rückstellkraft anschlägt. Wie aus Fig. 3 hervorgeht, befinden sich sämtliche Andrückelemente 5 in übereinstimmenden Ausgangspositionen in gleicher Winkellage mit spitzem Winkel zu dem Transportsektor 321. Die die Andrückelemente 5 anlenkende Schwenkachse 60 erstreckt sich an einer Einlaufseite des Zwischenraum-Förderabschnitts 21, so dass also die Andrückenden der Andrückköpfe 511 an der Auslaufseite des Zwischenraum-Förderabschnitts 21 gegen das ausreichend gespannt gehaltene umlaufende Transportband 32 gleitend anliegen.

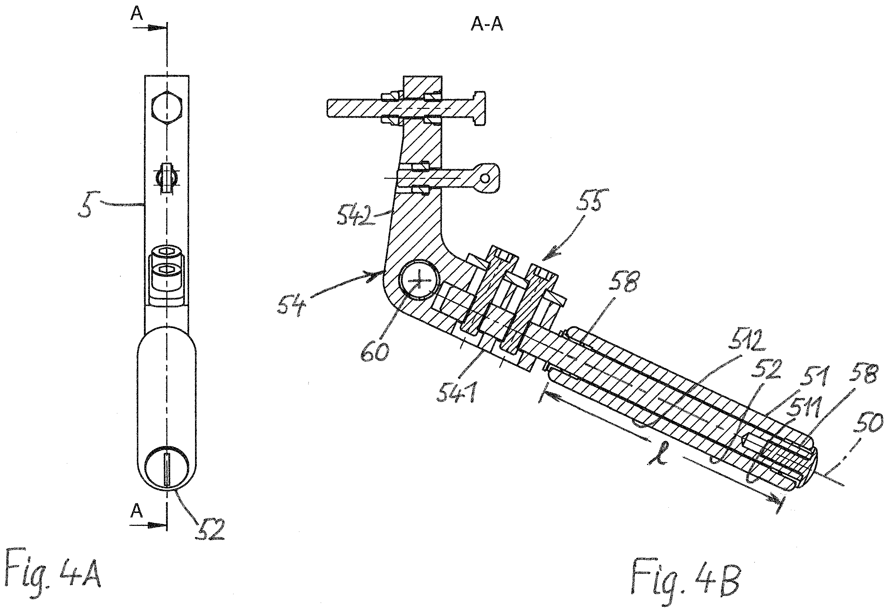

Wie insbesondere aus Fig. 4A, 4B und 5A bis 5D ersichtlich, sind die Andrückelemente 5 jeweils mit einer ein Andrück-Querprofil bestimmenden Andrückfläche 52 ausgebildet. Diese ist erfindungsgemäß zur Anpressanlage an die Förderdecke 31 über das gesamte Andrück-Querprofil im Profilquerschnitt konvex ausgeformt. Man erkennt, dass die Andrückfläche 52 der schwenkbeweglich angeordneten Andrückelemente 5 eine Fläche des Andrückkopfes 511 sowie im ganzen einen eine Abschnittslänge 1 aufweisenden Berührungsabschnitt 512 umfasst, in dessen Bereich das in den Förder-Zwischenraum gelangende Verzehrprodukt 11 auf die Andrückelemente 5 je nach Größe und Querschnitt auftrifft.

Im Ausführungsbeispiel ist die konvexe Andrückfläche 52 durch die Oberfläche eines Kreisabschnitts des Andrückprofils des Andrückelements 5 gebildet. Diese Ausbildung ist dadurch erreicht, dass das stabförmige Andrückelement durch ein zylinderförmiges Element mit Kreisquerschnitt gebildet ist, dessen Zylinderfläche wenigstens mit einem Kreisumfangsabschnitt die konvexe Andrückfläche 52 bildet.

Gemäß Ausführungsbeispiel ist jedes Andrückelement 5 weiterhin besonders dadurch gestaltet, dass das zylinderförmige Element durch eine frei drehbare Andrückrolle 51 in Form eines hohlen Rollenkörpers oder einer Hülse gebildet ist, die drehbar auf einem Achs- oder Lagerstab 56 gelagert ist, der mittels der Schraubverbindung 55 an dem Arbeitsarm 541 des Winkelstücks 54 befestigt ist. Die Drehverbindung umfasst zwischen die Andrückrolle 51 und den Achsstab 56 gesetzte Lagerbuchsen 58 zur gleitbeweglichen Lagerung.

Wie insbesondere aus Fig. 5A bis 5D ersichtlich, ist es vorteilhaft, dass der Abstand a zwischen zwei Andrückelementen 5 klein gegenüber dem Radius r der kreis-konvexen Andrückfläche 52 gewählt wird. Zum Beispiel wird r = 8mm und a = 1mm gewählt, so dass das Verhältnis a/r 1/8 beträgt. Allgemein ist es vorteilhaft, das Verhältnis in dieser Größenordnung einzurichten.

Zur Veranschaulichung ist in Fig. 5A bis 5D eine Förderposition eines Fischfilets 110 dargestellt. Um die Darstellung zu vereinfachen, ist der verformbare Transportsektor 321 des Transportbandes 32 nicht dargestellt, und auch der Transportsektor 421 ist nur strichpunktiert in Fig. 5C ersichtlich. Wesentlich ist allgemein, dass sich die Förderstrecke 31, also das Transportband 32 bzw. dessen Transportsektor 321 im Zusammenwirken mit den unter Anpresskraft gehaltenen Andrückelementen 5 exakt an die den Andrückelementen 5 zugewandte, also die fleischseitige Kontur des Fischfilets 110 anpassen, wobei das Transportband frei von Falten, Quetsch- oder Stauchbereichen bleibt.

In der dargestellten Position ist das Fischfilet 110 bereits zum größten Teil durch den Förder-Zwischenraum 2 hindurchgefördert worden. Die Andrückelemente 5 werden in Abhängigkeit von der Breitendimension, der Höhendimension sowie der Längendimension des Fischfilets 110 im Bauchlappenbereich 111 und im Loinbereich 112 mehr oder weniger weit ausgelenkt. Im Zusammenwirken mit der unter Rückstellkraft bewirkten Anlage der Andrückelemente 5 gegen den Transportsektor 321 des Transportbandes 32 bzw. gegen das passierende Fischfilet 110 erreicht man weitgehend vergleichmäßigte Andrückabstände d zwischen jeweils zwei Andrückstellen 53, die im Wesentlichen durch punktuellen bzw. in Förderrichtung F linienartigen und in Querrichtung dazu tangentialen Andrückkontakt bestimmt sind. Auch Bereiche des Fischfilets 110, die einen wulstartigen Querschnitt mit relativ stark abfallenden bzw. ansteigenden Abschnitten aufweisen, werden zur optimalen flächigen Anlage der Hautseite an die Gegenanlagefläche 40 angedrückt. Offensichtlich wird das Ausweichen der Bandkanten des Transportbandes 32 zur Bandmitte hin begünstigt mit der Folge, dass das Verzehrprodukt bzw. das Fischfilet 110 frei von Stauchen und Faltenbildungen gefördert wird. Infolgedessen ist die anschließende Bearbeitung mit höchster Genauigkeit und kleinsten Einstellmaßen fehlerfrei durchführbar. Das Bandmesser der Trennstation 80 trennt die Tiefenschicht fehlerfrei ab. Es hat sich herausgestellt, dass insbesondere der dünne Bauchlappenbereich 111 des Fischfilets 110 ohne Deformationen quer zur Förderichtung zuverlässig erfasst angedrückt wird.

Auch die aus Fig. 1 und 2 ersichtliche Trennstation 90 kann mit einer innerhalb des umlaufenden Transportbandes 32 angeordneten Andrückeinrichtung 94 ausgestattet sein. Diese übt auf das Fischfilet 110 im Bereich des Einzugsspalts der Trennstation 90 Andrückdruck aus. Zweckmäßig kann auch die Andrückeinrichtung 94 erfindungsgemäß mit einer Reihe von konvexen Andrückelementen gestaltet werden. Es ist dann ein zugehöriger Förder-Zwischenraum zwischen dem umlaufenden Transportband 32 und einer durch die Mitnehmerwalze 92 gebildeten Gegenanlage-Förderfläche gebildet.

## Patentansprüche

1. Transportvorrichtung (10) mit einer Förderstrecke, eingerichtet zum Zuführen einer Mehrzahl von in Förderrichtung (F) mit Längsausrichtung aufeinanderfolgenden, gleichartigen, Weichteile aufweisenden, zu bearbeitenden Verzehrprodukten (11), die jeweils quer zur Förderrichtung (F) einen durch Breiten- und Höhendimension bestimmten veränderlichen Profilquerschnitt mit insbesondere abfallenden bzw. ansteigenden Weichteilbereichen aufweisen, an eine Bearbeitungseinrichtung (8), umfassend wenigstens einen Förderabschnitt (21) mit einander zugewandte Förderflächen (3, 4), die in der Höhendimension der Verzehrprodukte (11) entsprechender Dimension übereinander angeordnet sind und unter Druckanlage an den Verzehrprodukten (11) diese zwischen sich aufnehmen derart, dass zwischen den Förderflächen (3, 4) ein während der Förderung sich mit veränderlichem Förderquerschnitt in Breiten- und Höhendimension an die Form jedes Profilquerschnitts der geförderten Verzehrprodukte (11) anpassender Förder-Zwischenraum (2) ausgebildet ist, wobei die eine erste Förderfläche (3) eine an die geförderten Verzehrprodukte (11) zur Anlage kommende, flexibel flächenverformbare, mittels Förderantrieb in Förderrichtung (F) bewegbare Förderdecke (31) sowie eine Reihenanordnung von Andrückelementen (5) umfasst, die in zur Förderrichtung (F) quer gerichteter Reihe nebeneinander, jede Breite des Förder-Zwischenraums (2) erfassend, stationär an der Transportvorrichtung (10) angeordnet sind, jeweils ein quer zur Förderrichtung (F) gerichtetes Andrück-Querprofil aufweisen und in Richtung der Höhendimension des Förder-Zwischenraums (2) gegen Rückstellkraft verdrängbar gehalten sind, derart, dass sie beim Durchgang der Verzehrprodukte (11) durch die Förderstrecke zum Ausbilden des veränderlichen Förderquerschnitts jeweils mit der flächenverformbaren Förderdecke (31) zusammenwirken und gegen die Verzehrprodukte (11) arbeiten, wobei wenigstens eine Teilreihe bildende Andrückelemente (5) jeweils mit einer das Andrück-Querprofil bestimmenden Andrückfläche (52) ausgebildet sind, die zur Anpressanlage an die Förderdecke (31) und gegen das passierende Verzehrprodukt (11) über das gesamte Andrück-Querprofil im Profilquerschnitt konvex ausgeformt ist.

2. Transportvorrichtung nach Anspruch 1, **dadurch gekennzeichnet, dass** die Förderdecke (31) durch einen die Verzehrprodukte (11) zur Förderung mitnehmenden Transportsektor (321) eines mittels Förderantrieb bewegbaren, umlaufenden Transportbandes (32) gebildet ist.

3. Transportvorrichtung nach Anspruch 1 oder 2, **dadurch gekennzeichnet, dass** die zweite Förderfläche (4) eine eine plane Gegenanlagefläche (40) bildende Transportanlagefläche ist.

4. Transportvorrichtung nach einem der Ansprüche 1 bis 3, **dadurch gekennzeichnet, dass** sämtliche Andrückelemente (5) jeweils mit der konvexen Andrückfläche (52) ausgebildet sind.

5. Transportvorrichtung nach einem der Ansprüche 1 bis 4, **dadurch g e - kennzeichnet,** dass die konvexen Andrückflächen (52) sämtlich gleich ausgebildet sind.

6. Transportvorrichtung nach einem der Ansprüche 1 bis 5, **dadurch gekennzeichnet, dass** sämtliche Andrückelemente (5) mit konvexer Andrückfläche (52) wenigstens einer Teilreihe gleich ausgebildet sind und in der Breitendimension des Zwischenraum-Förderabschnitts (21) äquidistant angeordnet sind.

7. Transportvorrichtung nach einem der Ansprüche 1 bis 6, **dadurch g e - kennzeichnet,** dass die Abstände zwischen benachbarten konvexen Andrückflächen (52) klein sind im Verhältnis zu den konvexen Profil-Querdimensionen benachbarter Andrückflächen (52).

8. Transportvorrichtung nach einem der Ansprüche 1 bis 7, **dadurch g e - kennzeichnet,** dass wenigstens eine Teilreihe mit den jeweils die konvexe Andrückfläche (52) aufweisenden Andrückelementen (5) wenigstens einem ansteigenden bzw. abfallenden Weichteilbereich von zu fördernden Verzehrprodukten (11) zugeordnet ist.

9. Transportvorrichtung nach einem der Ansprüche 1 bis 8, **dadurch gekennzeichnet, dass** die Andrückelemente (5) sich über den Förder-Zwischenraum (2) entsprechend der Förderrichtung (F) erstreckende stabförmige Elemente umfassen.

10. Transportvorrichtung nach Anspruch 9, **dadurch gekennzeichnet, dass** die stabförmigen Elemente um eine zur Förderrichtung (F) quer gerichtete Schwenkachse (60) gegen Rückstellkraft schwenkbewegbar angelenkt sind.

11. Transportvorrichtung nach Anspruch 10, **dadurch gekennzeichnet, dass** die die stabförmigen Elemente anlenkende Schwenkachse (60) an einer Einlaufseite des Zwischenraum-Förderabschnitts (21) angeordnet ist und die stabförmigen Elemente jeweils an ihrem einen Ende an die Schwenkachse (60) angelenkt sind.

12. Transportvorrichtung nach einem der Ansprüche 1 bis 11, **dadurch gekennzeichnet, dass** die konvexe Andrückfläche (52) durch die Oberfläche eines Kreisabschnitts des Andrückprofils des Andrückelements (5) gebildet ist.

13. Transportvorrichtung nach einem der Ansprüche 1 bis 12, **dadurch gekennzeichnet, dass** die konvexen Andrückelemente (5) wenigstens einer Teilreihe der Andrückelemente (5) durch sich entsprechend der Förderrichtung (F) erstreckende zylinderförmige Elemente mit die konvexe Andrückfläche (52) bildendem Kreisquerschnitt gebildet sind.

14. Transportvorrichtung nach Anspruch 13, **dadurch gekennzeichnet, dass** die kreiszylinderförmigen Elemente sich in Förderrichtung (F) erstreckende Rollen sind, die um ihre Rollenachsen (50) frei drehbar gelagert sind.

15. Bearbeitungsmaschine (1), umfassend wenigstens eine Bearbeitungseinrichtung (8) mit wenigstens einem Schneidwerkzeug (81) zum Abtrennen wenigstens eines Bestandteils von in Reihe geförderten Verzehrprodukten (11) und eine der Bearbeitungseinrichtung (8) vorgeordnete Transportvorrichtung (10), wobei die Bearbeitungseinrichtung (8) unmittelbar am Ende eines die Verzehrprodukte (11) in Reihe fördernden Zwischenraum-Förderabschnitts (21) der Transportvorrichtung (10) angeordnet ist, **dadurch gekennzeichnet, dass** die Transportvorrichtung (10) nach einem der Ansprüche 1 bis 14 ausgebildet ist.

16. Bearbeitungsmaschine (1) nach Anspruch 15, **dadurch gekenn- zeichnet**, dass eine genannte Bearbeitungseinrichtung (8) mit einem quer zur Förderrichtung (F) arbeitenden Schneidwerkzeug (81) ausgebildet ist, das zum Trennen einer Oberflächenschicht von an der zweiten Förderfläche (4) plan anliegender Seite jeweils von angeförderten Verzehrprodukten (11), insbesondere zum Entfernen einer Oberflächenschicht an der Unterseite von Fischfilets, eingerichtet ist.

17. Bearbeitungsmaschine nach Anspruch 16, **dadurch gekennzeichnet, dass** die Bearbeitungsmaschine (1) als Enthäutemaschine eingerichtet ist zum Entfernen zunächst einer oberen Normalschicht und dann einer Tiefenschicht an der Unterseite von Fischfilets mit zugeordnet einer ersten Trennstation (90) zum Abtrennen der Normalschicht und einer zweiten Trennstation (80) zum Abtrennen der Tiefenschicht, wobei der Trennstation (80) zum Abtrennen der Tiefenschicht eine Transportvorrichtung (10) gemäß einem der Ansprüche 1 bis 14 vorgeordnet ist.

18. Bearbeitungsmaschine nach Anspruch 17, **dadurch gekennzeichn e t,** dass die der zweiten Trennstation (80) vorgeordnete Transportvorrichtung (10) Bestandteil auch eines vor der ersten Station (90) angeordneten Fördermittels ist, das ein angetriebenes Transportband (32) mit einem Transportsektor (321) umfasst, der sich aus einem Bereich vor der ersten Trennstation (90) bis in den Bereich der zweiten Trennstation (80) erstreckt, und wobei die Transportvorrichtung (10) vor jeder Trennstation (80, 90) gemäß einem der Ansprüche 1 bis 14 ausgebildet ist.

## Claims

1. Conveying apparatus (10) with a conveying path, designed to supply a plurality of sequential, similar products (11) for consumption having soft parts and intended for processing and oriented longitudinally in the conveying direction (F), which products each have a variable profile cross-section transverse to the conveying direction (F) and determined by a width and height dimension, with particularly falling or rising soft part areas, to a processing device (8), comprising at least one conveying section (21) with conveying surfaces (3, 4) that face one another, which are arranged over one another in the dimension corresponding to the height dimension of the products (11) for consumption and, with the application of pressure, come into contact with the products (11) for consumption accommodating them therebetween in such a manner that between the conveying surfaces (3, 4) a conveying intermediate space (2) is formed adapted during conveyance to the form of each profile cross-section of the conveyed products (11) for consumption with a variable conveyor cross-section in the width and height dimension, wherein the one first conveying surface (3) comprises a flexible, surface-deformable conveying cover (31) which comes into contact with the conveyed products (11) for consumption and is movable in the conveying direction (F) by means of a conveyor drive and further comprises a row arrangement of pressure elements (5) that are arranged next to one another in a row directed transverse to the conveying direction (F), covering each width of the conveying space (2), stationary on the conveying apparatus (10), each having a pressure-applying transverse profile extending transverse to the conveying direction (F), and being held to be displaceable in the height dimension of the conveying intermediate space (2) against a restoring force such that each pressure element (5) co-operates with the surface-deformable conveying cover (31) during the passage of the products (11) for consumption through the conveying path in order to form the variable conveyor cross-section and to work against the products (11) for consumption, wherein pressure elements (5) forming at least a partial row are each designed with a pressure-applying surface (52) that determines the pressure-applying transverse profile, which pressure-applying surface is formed to have a convex profile cross-section over the entire pressure-applying transverse profile in order to apply pressure to the conveying cover (31) and against the passing products (11) for consumption.

2. Conveying apparatus according to claim 1, **characterized in that** the conveying cover (31) is formed by a transport sector (321) of a revolving transport belt (32) movable by means of a conveyor drive, said transport sector taking the products (11) for consumption with it for conveyance.

3. Conveying apparatus according to claim 1 or 2, **characterized in that** the second conveying surface (4) is a transport contact surface forming a flat counter-surface (40).

4. Conveying apparatus according to any one of claims 1 to 3, **characterized in that** all pressure elements (5) are each designed with the convex pressure-applying surface (52) in each case.

5. Conveying apparatus according to any one of claims 1 to 4, **characterized in that** the convex pressure-applying surfaces (52) are all designed the same.

6. Conveying apparatus according to any one of claims 1 to 5, **characterized in that** all pressure elements (5) with a convex pressure-applying surface (52) at least of a partial row are designed the same and are arranged equidistantly in the width dimension of the conveying section (21) of the intermediate space.

7. Conveying apparatus according to any one of claims 1 to 6, **characterized in that** the distances between adjacent convex pressure-applying surfaces (52) are small in relation to the convex profile cross dimensions of adjacent pressure-applying surfaces (52).

8. Conveying apparatus according to any one of claims 1 to 7, **characterized in that** at least a partial row with the pressure elements (5) each having the convex pressure-applying surface (52) is allocated to a rising or falling soft part area of products (11) for consumption to be conveyed.

9. Conveying apparatus according to any one of claims 1 to 8, **characterized in that** the pressure elements (5) comprise rod-shaped elements extending over the conveying space (2) corresponding to the conveying direction (F).

10. Conveying apparatus according to claim 9, **characterized in that** the rod-shaped elements are hinged to be pivotably movable against a restoring force on a pivot axis (60) oriented transversely to the conveying direction (F).

11. Conveying apparatus according to claim 10, **characterized in that** the pivot axis (60) hinging the rod-shaped elements is arranged on an entry side of the conveying section (21) of the intermediate space and the rod-shaped elements are each attached to the pivot axis (60) in a swivelling manner on their one end.

12. Conveying apparatus according to any one of claims 1 to 11, **characterized in that** the convex pressure-applying surface (52) is formed by the surface of a circle section of the pressure-applying profile of the pressure element (5).

13. Conveying apparatus according to any one of claims 1 two 12, **characterized in that** the convex pressure-applying elements (5) at least of a partial row of pressure elements (5) are formed by cylindrical elements extending in accordance with the conveying direction (F) having a circular cross-section forming the convex pressure-applying surface (52).

14. Conveying apparatus according to claim 13, **characterized in that** the circular cylindrical elements are rollers extending in the conveying direction (F), which are mounted to rotate freely on their roller axes (50).

15. Processing machine (1), comprising at least one processing device (8) with at least one cutting tool (81) for separating at least a part of products (11) for consumption conveyed in a row and a conveying apparatus (10) upstream of the processing device (8), wherein the processing device (8) is arranged directly at the end of a conveying section (21) of the intermediate space of the conveying apparatus (10) which conveys the products for consumption (11) in a row, **characterized in that** the conveying apparatus (10) is designed according to any one of claims 1 to 14.

16. Processing machine (1) according to claim 15, **characterized in that** said processing device (8) is designed with a cutting tool (81) which works transversely to the conveying direction (F), said tool being designed to separate a surface layer from a side of conveyed products (11) for consumption which lie flat on the second conveying surface (4), particularly for removing a surface layer on the underside of fish fillets.

17. Processing machine according to claim 16, **characterized in that** the processing machine (1) is designed as a skinning machine for removing first an upper normal layer and then a deep layer on the underside of fish fillets comprising, assigned to the normal layer and the deep layer, respectively, a first separating station (90) for separating the normal layer and a second separating station (80) for separating the deep layer, wherein a conveying apparatus (10) according to any one of claims 1 to 14 is arranged upstream of the separating station (80) for separating the deep layer.

18. Processing machine according to claim 17, **characterized in that** the conveying apparatus (10) upstream of the second separating station (80) is also part of a means of conveyance arranged before the first station (90), said means comprising a driven transport belt (32) with a transport sector (321) which extends from an area upstream of the first separating station (90) up into the area of the second separating station (80), and in which the conveying apparatus (10) is designed upstream of each separating station (80, 90) according to any one of claims 1 to 14.

## Revendications

1. Dispositif de transport (10) doté d'une voie de transport agencée pour acheminer à un dispositif de traitement (8) une multitude de produits de consommation (11) semblables à traiter se suivant les uns aux autres en orientation longitudinale dans la direction de transport (F), comprenant des parties molles et présentant chacun transversalement à la direction de transport (F) une section de profil déterminée par une dimension de largeur et une dimension de hauteur et comprenant des zones de parties molles notamment descendantes ou ascendantes, comprenant au moins un tronçon de transport (21) avec des surfaces de transport (3, 4) en regard qui sont disposées les unes au-dessus des autres dans une dimension correspondant à la dimension de hauteur des produits de consommation (11) et qui reçoivent entre elles, en appui sur les produits de consommation (11), ceux-ci de façon qu'il soit formé entre les surfaces de transport (3, 4) un espace intermédiaire de transport (2) s'adaptant pendant le transport par une section de transport variable en dimension de largeur et dimension de hauteur à la forme de chaque section de profil des produits de consommation (11) transportés, l'une des premières surfaces de transport (3) comprenant un plafond de transport (31) venant en appui sur les produits de consommation (11) transportés et étant déformable en surface de manière flexible et déplaçables dans la direction de transport (F) à l'aide d'un entraînement de transport ainsi qu'un agencement en série d'éléments d'appui (5) qui sont disposés de manière stationnaire au dispositif de transport (10) en une ligne transversale à la direction de transport (F) les uns à côté des autres et saisissant toute largeur de l'espace intermédiaire de transport (2), présentent un profil transversal d'appui orienté transversalement à la direction de transport (F) et sont escamotables dans la direction de la dimension de hauteur de l'espace intermédiaire de transport (2) à l'encontre d'une force de rappel, de façon qu'ils coopèrent chacun, lors d'un passage des produits de consommation (11) par le tronçon de transport, pour la formation de la section de transport variable, avec le plafond de transport (31) déformable en surface et agissent contre les produits de consommation (11), des éléments d'appui (5) formant au moins un ligne partielle étant formés chacun avec une surface d'appui (52) déterminant le profil transversal d'appui et qui est formée de manière convexe sur le profil transversal d'appui entier en section transversal de profil, pour un appui sur le plafond de transport (31) et sur le produit de consommation (11) passant.

2. Dispositif de transport selon la revendication 1, **caractérisé en ce que** le plafond de transport (31) est formé par un tronçon de transport (321) amenant les produits de consommation (11) pour le transport, d'une bande transporteuse sans fin (32) déplaçable par un entraînement de transport.

3. Dispositif de transport selon la revendication 1 ou 2, **caractérisé en ce que** la deuxième surface de transport (4) est une surface d'appui de transport formant une surface plane de contre-appui (40).

4. Dispositif de transport selon l'une des revendications 1 à 3, **caractérisé en ce que** tous les éléments d'appui (5) sont formés avec la surface d'appui convexe (52).

5. Dispositif de transport selon l'une des revendications 1 à 4, **caractérisé en ce que** les surfaces d'appui convexes (52) sont toutes formées de la même façon.

6. Dispositif de transport selon l'une des revendications 1 à 5, **caractérisé en ce que** tous les éléments d'appui (5) ayant une surface d'appui convexe (52) d'au moins une ligne partielle sont formés de la même façon et sont disposés de manière équidistante dans la dimension de largeur du tronçon de transport (21) de l'espace intermédiaire.

7. Dispositif de transport selon l'une des revendications 1 à 6, **caractérisé en ce que** les distances entre des surfaces d'appui convexes (52) avoisinantes sont faibles par rapport aux dimensions transversales de profils convexes de surfaces d'appui (52) avoisinantes.

8. Dispositif de transport selon l'une des revendications 1 à 7, **caractérisé en ce qu'**au moins une ligne partielle avec les éléments d'appui (5) comprenant chacun la surface d'appui convexe (52), est associée à au moins une zone ascendante ou descendante de parties molles de produits de consommation (11) à transporter.

9. Dispositif de transport selon l'une des revendications 1 à 8, **caractérisé en ce que** les éléments d'appui (5) comprennent des éléments en forme de tiges s'étendant sur l'espace intermédiaire de transport (2) selon la direction de transport (F).

10. Dispositif de transport selon la revendication 9, **caractérisé en ce que** les éléments en forme de tiges sont articulés autour d'un axe de pivotement (60) orienté transversalement à la direction de transport (F) et mobile en pivotement à l'encontre d'une force de rappel.

11. Dispositif de transport selon la revendication 10, **caractérisé en ce que** l'axe de pivotement (60) articulant les éléments en forme de tige est disposé sur un côté d'entrée du tronçon de transport (21) de l'espace intermédiaire et que les éléments en forme de tige sont articulés à l'axe de pivotement (60) par une de leurs extrémités.

12. Dispositif de transport selon l'une des revendications 1 à 11, **caractérisé en ce que** la surface d'appui convexe (52) est formée par la surface d'une partie de cercle du profil d'appui de l'élément d'appui (5).

13. Dispositif de transport selon l'une des revendications 1 à 12, **caractérisé en ce que** les éléments d'appui convexes (5) d'au moins une ligne partielle des éléments d'appui (5) sont formés par des éléments en forme de cylindres s'étendant selon la direction de transport (F) et ayant une section transversale de cercle formant la surface d'appui convexe (52).

14. Dispositif de transport selon la revendication 13, **caractérisé en ce que** les éléments en forme de cylindres circulaires sont des rouleaux s'étendant dans la direction de transport (F) qui sont montés à rotation libre autour de leurs axes de rouleaux (50).

15. Machine de traitement (1), comprenant au moins un dispositif de traitement (8) avec au moins un outil de coupe (81) pour découper au moins une partie constitutive de produits de consommation (11) transportés en série et un dispositif de transport (10) disposé en amont du dispositif de traitement (8), le dispositif de traitement (8) étant disposé immédiatement à la fin d'un tronçon de transport (21) de l'espace intermédiaire transportant en série les produits de consommation (11), **caractérisée en ce que** le dispositif de transport (10) est conçu selon l'une des revendications 1 à 14.

16. Machine de traitement (1) selon la revendication 15, **caractérisée en ce qu'**un dispositif de traitement (8) est conçu avec un outil de coupe (81) travaillant transversalement à la direction de transport (F) qui est agencé pour découper une couche de surface de chacun de produits de consommation (11) acheminés et en appui de manière plane à la deuxième surface de transport (4), notamment pour enlever une couche de surface sur le côté inférieur de filets de poisson.

17. Machine de traitement selon la revendication 16, **caractérisée en ce que** la machine de traitement (1) est agencée comme machine à enlever la peau pour enlever d'abord une couche normale supérieure et puis une couche plus profonde sur le côté inférieur de filets de poisson avec, de manière associée, une première station de sectionnement (90) pour découper la couche normale et une seconde station de sectionnement (80) pour découper la couche profonde, un dispositif de transport (10) selon l'une des revendications 1 à 14 étant disposé en amont de la station de sectionnement (80) pour découper une couche profonde.

18. Machine de traitement selon la revendication 17, **caractérisée en ce que** le dispositif de transport (10) monté en amont de la seconde station de sectionnement (80) fait partie d'un moyen de transport disposé en amont de la première station (90), qui comprend une bande transporteuse (32) entraînée avec un secteur de transport (321) qui s'étend à partir d'une zone devant la première station de sectionnement (90) jusque dans la zone de la seconde station de sectionnement (80), et le dispositif de transport (10) devant chaque station de sectionnement (80, 90) étant conçu selon l'une des revendications 1 à 14.
